# EUROPÄISCHE PATENTSCHRIFT

(11) **EP 3 967 989 B1**
(45) Veröffentlichungstag und Bekanntmachung des Hinweises auf die Patenterteilung: **27.03.2024**
(21) Anmeldenummer: 21191848.7
(22) Anmeldetag: 18.08.2021
(51) Int. Cl.: G01F 1/66, G01F 25/10

(54) **VERFAHREN ZUM BETREIBEN EINES ULTRASCHALL-DURCHFLUSSMESSGERÄTS UND ULTRASCHALL-DURCHFLUSSMESSGERÄT**
ULTRASOUND FLOW METER AND METHOD FOR OPERATING AN ULTRASOUND FLOW METER
PROCÉDÉ DE FONCTIONNEMENT D'UN DÉBITMÈTRE À ULTRASONS ET DÉBITMÈTRE À ULTRASONS

(30) Priorität: 10.09.2020 DE 102020123653
(43) Veröffentlichungstag der Anmeldung: 16.03.2022
(73) Patentinhaber: Krohne AG, 4019 Basel (CH)
(72) Erfinder: Huijzer, Arie, 3363 BS Sliedrecht (NL)
(74) Vertreter: Gesthuysen Patentanwälte

(56) Entgegenhaltungen:
- EP-A1- 2 069 723
- DE-A1-102015 210 732
- US-A- 4 527 433
- US-A1- 2019 118 224
- US-A1- 2019 128 715

## Beschreibung

Die Erfindung geht aus von einem Verfahren zum Betreiben eines Ultraschall-Durchflussmessgeräts, wobei das Ultraschall-Durchflussmessgerät wenigstens einen ersten Ultraschallwandler, wobei der erste Ultraschallwandler als Sendeeinheit und als Empfangseinheit ausgebildet ist, und ein Messrohr, wobei das Messrohr im Betrieb von einem Medium durchströmt wird, und eine Steuer- und Auswerteeinheit zur Ansteuerung von zumindest dem ersten Ultraschallwandler und zur Bestimmung der Strömungsgeschwindigkeit bzw. des Durchflusses des Mediums aufweist.

Darüber hinaus betrifft die Erfindung ein Ultraschall-Durchflussmessgerät mit wenigstens einem ersten Ultraschallwandler, wobei der erste Ultraschallwandler als Sendeeinheit und als Empfangseinheit ausgebildet ist, und mit einem Messrohr, wobei das Messrohr im Betrieb von einem Medium durchströmt wird, und mit einer Steuer- und Auswerteeinheit zur Ansteuerung von zumindest dem ersten Ultraschallwandler und zur Bestimmung der Strömungsgeschwindigkeit bzw. des Durchflusses des Mediums aufweist.

Im Betrieb eines solchen Ultraschall-Durchflussmessgeräts wird der Durchfluss eines Mediums durch das Messrohr basierend auf der Differenz der Laufzeit eines Messsignals, das in Strömungsrichtung das Medium durchläuft, und eines Messsignals, das entgegen der Strömungsrichtung das Medium durchläuft. Bei der Aussendung eines Messsignals in das Medium durch einen Ultraschallwandler wird jedoch nur ein kleiner Teil der Energie tatsächlich in das Medium ausgesendet. Durch Reflexionen innerhalb des Ultraschallwandlers sowie durch fortdauernde Vibrationen kommt es in dem Ultraschallwandler zu einem unerwünschten Störsignal, dem Klingelsignal, das erst allmählich mit der Zeit abfällt.

In dem hier betrachteten Fall, in dem der wenigstens eine Ultraschallwandler abwechselnd als Sendeeinheit und anschließend als Empfangseinheit arbeitet, kann nun die Situation auftreten, dass das empfangene Messsignal von dem eigenen Klingelsignal des Ultraschallwandlers überlagert wird, wodurch insbesondere der für die Bestimmung der Laufzeit relevante Nulldurchgang des Messsignals verschoben wird, wodurch in der Folge die Laufzeitmessung fehlerbehaftet ist. Die Überlagerung des Empfangssignals mit dem Klingelsignal wirkt sich insofern negativ auf die Messgenauigkeit aus.

Aus dem Stand der Technik ist es bekannt, zur Vermeidung der Überlagerung des Ultraschallwandler eigenen Klingelsignals mit dem empfangenen Messsignal, den Zeitversatz zwischen Aussendung des Messsignals und Empfang eines Messsignals derart zu bemessen, dass sichergestellt ist, dass das eigene Klingelsignal bereits abgeklungen ist.

Diese Methode hat jedoch den Nachteil, dass die Wiederholrate der Durchflussmessung beschränkt ist. Zudem kann es passieren, dass sich die Strömungsgeschwindigkeit innerhalb eines Messintervalls, also in der Zeit zwischen der Aussendung eines Messsignals und dem Empfang eines Messsignals ändert, was sich ebenfalls negativ auf die Messgenauigkeit auswirkt.

Neben dem Ansatz, die Zeit zwischen der Aussendung und dem Empfang eines Messsignals zu erhöhen, ist es ebenfalls bekannt, ein das Klingelsignal absorbierendes Material in den Ultraschallwandler einzubauen.

Darüber hinaus sind aus dem Stand der Technik weitere Ansätze bekannt, durch die eine Störung des Empfangssignals durch das Klingelsignal vermieden werden soll.

Aus der Druckschrift DE 43 15 725 A1 ist ein Ultraschall-Durchflussmessgerät bekannt, wobei die Wiederholungsfrequenz der Aussendung des Sendesignals eines bestimmten Wandlers zufällig variiert wird und über mehrere, diesen Sendesignalen zugehörigen Empfangssignale gemittelt wird, um von dem Ausklingen der Wandler herrührende Störsignale zu herauszumitteln.

Die Veröffentlichung "Estimation and Detection in the Presence of Ringing Noise" von Brant Jameson und Roberto Manduchi (DOI: 10.1109/ULT-SYM.2010.5935877) betrifft einen Ultraschallwandler, der zur Detektion von Objekten ein Messsignal aussendet und dieses Messsignal nach der Reflexion an dem Objekt wieder empfängt. Zur Eliminierung des Klingelsignals, das durch Aussendung des Sendesignals entsteht, wird ein Klingelsignal abgeschätzt und dieses Klingelsignal wird von dem Empfangssignal subtrahiert.

Aus der Druckschrift WO 2017/187146 A1 ist ein Ultraschall-Durchflussmessgerät mit zwei Ultraschallwandlern bekannt, wobei die Phase eines Messsignals variiert wird, sodass das störende Klingelsignal nach einer Mittelung über mehrere Messungen herausgemittelt werden kann.

Zudem ist aus der Offenlegungsschrift WO 2019/042288 A1 ein Ultraschall-Durchflussmessgerät bekannt, wobei ein Ultraschallwandler mit unterschiedlichen Wellenformen angeregt wird, um die Oszillationen des Ultraschallwandlers zu dämpfen. DE 10 2015 210732 A1 offenbart einen Ultraschall-Durchflussmesser, bei dem das akustische Umgebungsgeräusch aufgezeichnet und von den gemessenen Signalen subtrahiert werden kann.

Ausgehend von dem zuvor genannten Stand der Technik ist es Aufgabe der Erfindung, ein Verfahren zum Betreiben eines Ultraschall-Durchflussmessgeräts anzugeben, mit dem die Genauigkeit der Durchflussmessung erhöht werden kann. Darüber hinaus ist es Aufgabe der Erfindung, ein Ultraschall-Durchflussmessgerät zur Durchführung des erfindungsgemäßen Verfahrens anzugeben.

Gemäß einer ersten Lehre der Erfindung wird die zuvor dargelegte Aufgabe durch ein eingangs genanntes Verfahren dadurch gelöst, dass das Verfahren die folgenden Schritte umfasst:
- Erfassung von wenigstens einem ersten Klingelsignal des ersten Ultraschallwandlers und Bestimmung eines ersten Klingelentstörsignals basierend auf dem wenigstens einen erfassten ersten Klingelsignal,
- Aussenden eines ersten Messsignals in das Medium durch den ersten Ultraschallwandler, wobei ein erstes Klingelmesssignal im ersten Ultraschallwandler entsteht,
- Empfang eines Messsignals als erstes Empfangssignal durch den ersten Ultraschallwandler, wobei sich das erste Empfangssignal und das erste Klingelmesssignal zu einem ersten Überlagerungssignal überlagern,
- Bestimmung eines ersten Korrektursignals durch Subtraktion des ersten Klingelentstörsignals von dem ersten Überlagerungssignal und
- Bestimmung der Strömungsgeschwindigkeit bzw. des Durchflusses basierend auf dem ersten Korrektursignal.

Das erfindungsgemäße Verfahren gliedert sich in zwei Messabschnitte. In einem Messabschnitt A wird wenigstens ein Klingelsignal, das für den wenigstens einen Ultraschallwandler charakteristisch ist, zunächst messtechnisch erfasst. Basierend auf diesem wenigstens einen gemessenen Klingelsignal wird ein erstes Klingelentstörsignal bestimmt. Dieses Klingelentstörsignal wird in der Steuer- und Auswerteeinheit hinterlegt und im nachfolgenden Messabschnitt B bei der Bestimmung der Strömungsgeschwindigkeit bzw. des Durchflusses berücksichtigt.

Der nachfolgende Messabschnitt B betrifft die Messung der Strömungsgeschwindigkeit bzw. des Durchflusses, wobei durch Subtraktion des ersten Klingelentstörsignals von dem ersten Überlagerungssignal, die Überlagerung mit dem ersten Klingelmesssignal beseitigt oder zumindest minimiert wird.

Das während der Messung auftretende Klingelmesssignal ist insofern ein tatsächliches Signal, das nicht messtechnisch erfasst wird, dessen Einfluss auf das Empfangssignal jedoch durch die Subtraktion des Klingelentstörsignals beseitigt bzw. minimiert wird.

Im Gegensatz zu den aus dem Stand der Technik bekannten Verfahren beruht die erfindungsgemäße Bereinigung des Überlagerungssignals nicht auf einer pauschalen Abschätzung und/oder pauschalen Beseitigung des Klingelsignals. Vielmehr wird erfindungsgemäß durch die messtechnische Bestimmung des Klingelentstörsignals berücksichtigt, dass Klingelsignale veränderlich und darüber hinaus auch charakteristisch für unterschiedliche Ultraschallwandler sind.

Im Ergebnis entspricht das bereinigte Korrektursignal im Wesentlichen dem Empfangssignal, wodurch eine besonders genaue Laufzeitbestimmung des Messsignals ermöglicht wird. In der Folge ist die Messgenauigkeit des Ultraschall-Durchflussmessgerätes durch das erfindungsgemäße Verfahren besonders hoch.

Grundsätzlich kann das von dem ersten Ultraschallwandler empfangene Messsignal das durch diesen Ultraschallwandler ausgesendete Messsignal sein. In diesem Fall wird das Messsignal derart innerhalb des Messrohrs reflektiert, dass das Messsignal das Medium sowohl in Strömungsrichtung als auch entgegen der Strömungsrichtung durchläuft. Als Reflexionselement ist beispielsweise ein zweiter Ultraschallwandler vorhanden, der als Empfänger ausgebildet ist, sodass die Laufzeit des Messsignals am Reflexionspunkt bestimmt werden kann.

Weiterhin kann das empfangene Messsignal auch ein von einem anderen Ultraschallwandler ausgesendetes Messsignal sein.

Gemäß einer vorteilhaften Ausgestaltung des erfindungsgemäßen Verfahrens weist das Ultraschall-Durchflussmessgerät wenigstens einen ersten Ultraschallwandler und einen zweiten Ultraschallwandler auf, wobei der erste und der zweite Ultraschallwandler jeweils als Sendeeinheit und als Empfangseinheit ausgebildet sind und wobei der erste und der zweite Ultraschallwandler in Strömungsrichtung zueinander versetzt an dem Messrohr angeordnet sind, wobei das Verfahren die folgenden Schritte umfasst:
- Erfassung von wenigstens einem ersten Klingelsignal des ersten Ultraschallwandlers und Bestimmung eines ersten Klingelentstörsignals basierend auf dem wenigstens einen erfassten ersten Klingelsignal und/oder
- Erfassung von wenigstens einem zweiten Klingelsignal des zweiten Ultraschallwandlers und Bestimmung eines zweiten Klingelentstörsignals basierend auf dem wenigstens einen erfassten zweiten Klingelsignal,
- Aussenden eines ersten Messsignals in das Medium durch den ersten Ultraschallwandler, wobei ein erstes Klingelmesssignal im ersten Ultraschallwandler entsteht,
- Aussenden eines zweiten Messsignals in das Medium durch den zweiten Ultraschallwandler, wobei ein zweites Klingelmesssignal im zweiten Ultraschallwandler entsteht,
- Empfang des zweiten Messsignals als erstes Empfangssignal durch den ersten Ultraschallwandler, wobei sich das erste Empfangssignal und das erste Klingelmesssignal zu einem ersten Überlagerungssignal überlagern,
- Empfang des ersten Messsignals als zweites Empfangssignal durch den zweiten Ultraschallwandler, wobei sich das zweite Empfangssignal und das zweite Klingelmesssignal zu einem zweiten Überlagerungssignal überlagern,
- Bestimmung eines ersten Korrektursignals durch Subtraktion des ersten Klingelentstörsignals von dem ersten Überlagerungssignal und/oder
- Bestimmung eines zweiten Korrektursignals durch Subtraktion des zweiten Klingelentstörsignals von dem zweiten Überlagerungssignal und
- Bestimmung der Strömungsgeschwindigkeit bzw. des Durchflusses basierend auf dem ersten und/oder dem zweiten Korrektursignal.

Sind wenigstens zwei Ultraschallwandler zur Messung der Strömungsgeschwindigkeit bzw. des Durchflusses vorhanden, die jeweils als Sendeeinheit und als Empfangseinheit arbeiten und wobei die Strömungsgeschwindigkeit bzw. der Durchfluss unter Berücksichtigung der Klingelentstörsignale von beiden Ultraschallwandlern bestimmt wird, so kann die Messgenauigkeit eines solchen Ultraschall-Durchflussmessgeräts weiter erhöht werden.

Zudem ist es ebenfalls denkbar, dass die erfindungsgemäße Bereinigung um das eigene Klingelentstörsignal nur bei einem Ultraschallwandler durchgeführt wird.

Gemäß einer weiteren Ausgestaltung weist das Ultraschall-Durchflussmessgerät mehr als zwei Ultraschallwandler auf, wobei bei jeweils einem Ultraschallwandlerpaar das zuvor beschriebene Verfahren durchgeführt wird.

Die anfängliche messtechnische Erfassung des Klingelsignals und die anschließende Berücksichtigung des Klingelentstörsignals bei der Bestimmung der Strömungsgeschwindigkeit bzw. des Durchflusses hat darüber hinaus den Vorteil, dass die Wiederholrate einzelner Durchflussmessungen nicht beeinflusst wird, sodass diese besonders hoch sein kann.

Gemäß einer bevorzugten Ausgestaltung senden der erste Ultraschallwandler und der zweite Ultraschallwandler im Wesentlichen zeitgleich das erste Messsignal und das zweite Messsignal aus. Diese Ausgestaltung des Verfahrens weist den Vorteil auf, dass die gemessenen Laufzeiten der Messsignale, die in und entgegen der Strömungsrichtung das Medium durchlaufen, zeitgleich stattfinden können, sodass insbesondere konstante Prozessbedingungen gewährleistet werden können. Mit der Zeit variierende Prozessbedingungen, wie beispielsweise Druckschwankungen und/oder Temperaturschwankungen und/oder Schwankungen der Strömungsgeschwindigkeit beeinflussen gemäß dieser Ausgestaltung die Bestimmung des Durchflusses nicht. Dabei heißt im Wesentlichen zeitgleich, dass das erste und das zweite Messsignal mit einem Zeitversatz von weniger als der Hälfte des zeitlichen Abstandes zwischen der Aussendung zweier Messsignale von einem Ultraschallwandler, insbesondere von weniger als 500 µs, besonders bevorzugt mit einem Zeitversatz zwischen 0 und 1µs, ausgesendet werden. Gemäß einer weiter bevorzugten Ausgestaltung werden das erste und das zweite Messsignal ohne Zeitversatz ausgesendet.

Gemäß einer alternativen Ausgestaltung erfolgt die Aussendung des ersten und des zweiten Messsignals sequentiell, d.h. der zweite Ultraschallwandler sendet das zweite Messsignal erst aus, nachdem er das erste Messsignal empfangen hat. Auch in dieser Ausgestaltung ist es vorteilhaft, das Klingelsignal von wenigstens einem Ultraschallwandler bei der Bestimmung des Durchflusses zur Erhöhung der Messgenauigkeit zu berücksichtigen.

Grundsätzlich kann das erste und/oder das zweite Klingelentstörsignal ein festes, unveränderliches Klingelentstörsignal sein oder das erste und/oder das zweite Klingelentstörsignal kann bzw. können im Verlauf einer Messung an die Variation von Prozessbedingung und/oder Zustandsänderungen des jeweiligen Ultraschallwandlers angepasst werden.

Gemäß einer Ausgestaltung des Verfahrens entspricht das erste Klingelentstörsignal einem einmalig, vor der Messung, insbesondere bei Inbetriebnahme, erfassten ersten Klingelsignal, wobei das Klingelsignal des ersten Ultraschallwandlers unmittelbar nach der Aussendung eines ersten Messsignals messtechnisch erfasst wird. Alternativ oder zusätzlich entspricht das zweite Klingelentstörsignal einem einmalig, vor der Messung, insbesondere bei Inbetriebnahme, erfassten zweiten Klingelsignal, wobei das Klingelsignal des zweiten Ultraschallwandlers unmittelbar nach der Aussendung eines zweiten Messsignals messtechnisch erfasst wird.

Gemäß einer nächsten vorteilhaften Ausgestaltung wird während einer Messung in regelmäßigen oder unregelmäßigen Abständen das erste Klingelentstörsignal des ersten Ultraschallwandlers und/oder das zweite Klingelentstörsignal des zweiten Ultraschallwandlers aktualisiert.

Beispielsweise kann das Klingelsignal des ersten Ultraschallwandlers im Verlauf der Messung erneut messtechnisch erfasst werden, wobei vorzugsweise ein Zeitpunkt verwendet wird, an dem der zweite Ultraschallwandler keine Messsignale erzeigt, wobei das aktualisierte erste Klingelentstörsignal dem neu erfassten ersten Klingelsignal entspricht. Alternativ oder zusätzlich kann das Klingelsignal des zweiten Ultraschallwandlers im Verlauf der Messung erneut messtechnisch erfasst werden, wobei vorzugsweise ein Zeitpunkt verwendet wird, an dem der erste Ultraschallwandler keine Messsignale erzeugt, wobei das aktualisierte zweite Klingelentstörsignal dem neu erfassten zweiten Klingelsignal entspricht.

Gemäß einer weiteren Ausgestaltung entspricht das erste Klingelentstörsignal einer Mittelung über eine Mehrzahl von Einzelmessungen von ersten Klingelsignalen des ersten Ultraschallwandlers und/oder das zweite Klingelentstörsignal entspricht einer Mittelung über eine Mehrzahl von Einzelmessungen von zweiten Klingelsignalen des zweiten Ultraschallwandlers.

Zur Bestimmung des ersten Klingelentstörsignals werden vor der Messung eine Mehrzahl von Einzelmessungen des ersten Klingelsignals des ersten Ultraschallwandlers, vorzugsweise unter Prozessbedingungen, messtechnisch erfasst und eine Mittelung über die erfassten Signale wird bestimmt. Alternativ oder zusätzlich werden zur Bestimmung des zweiten Klingelentstörsignals vor der Messung eine Mehrzahl von Einzelmessungen des zweiten Klingelsignals des zweiten Ultraschallwandlers, vorzugsweise unter Prozessbedingungen, messtechnisch erfasst und eine Mittelung über die erfassten Signale wird bestimmt.

Gemäß einer Ausgestaltung wird, wie bereits oben dargelegt, während einer Messung in regelmäßigen oder unregelmäßigen Abständen das erste Klingelentstörsignal des ersten Ultraschallwandlers und/oder das zweite Klingelentstörsignal des zweiten Ultraschallwandlers aktualisiert.

Besonders bevorzugt wird zur Aktualisierung des ersten Klingelentstörsignals das erste Klingelsignal während einer Messung neu erfasst und die Mittelung mehrerer Einzelmessungen wird unter Berücksichtigung des neu erfassten ersten Klingelsignals neu bestimmt, wobei vorzugsweise das neu erfasste erste Klingelsignal besonders hoch gewichtet wird und/oder es wird zur Aktualisierung des zweiten Klingelentstörsignals das zweite Klingelsignal während einer Messung neu erfasst und die Mittelung über mehrere Einzelmessungen wird unter Berücksichtigung des neu erfassten zweiten Klingelsignals neu bestimmt, wobei vorzugsweise das neu erfasste zweite Klingelsignal besonders hoch gewichtet wird.

Beispielsweise kann das erste Klingelentstörsignal dadurch aktualisiert werden, dass neu erfasste erste Klingelsignal mit dem bisherigen ersten Klingelentstörsignal gemittelt wird, wobei vorzugsweise das neu erfasste erste Klingelsignal höher gewichtet ist als das bisherige erste Klingelentstörsignal und/oder das zweite Klingelentstörsignal kann dadurch aktualisiert werden, dass neu erfasste zweite Klingelsignal mit dem bisherigen zweiten Klingelentstörsignal gemittelt wird, wobei vorzugsweise das neu erfasste zweite Klingelsignal höher gewichtet ist als das bisherige zweite Klingelentstörsignal.

Die zuvor beschriebene Aktualisierung des Klingelentstörsignals oder der Klingelentstörsignale weist den Vorteil auf, dass in die Bestimmung des ersten bzw. des zweiten Klingelentstörsignals insbesondere sich aus aktuellen Änderungen der Prozessbedingungen ergebende Variationen, vorzugsweise mit hoher Gewichtung, berücksichtigt werden. Gemäß einer Ausgestaltung werden die neu erfassten ersten und/oder zweiten Klingelsignale bei der Bestimmung der Mittelung über eine Mehrzahl Einzelmessungen höher gewichtet als sämtliche anderen in die Mittelung eingehenden Signale.

Gemäß einer weiteren Ausgestaltung berücksichtigt die Mittelung über die ersten Klingelsignale des ersten Ultraschallwandlers und/oder die Mittelung über die zweiten Klingelsignale des zweiten Ultraschallwandlers stets eine feste Anzahl an Klingelsignalen, die in die Mittelung eingehen. Wird also ein neu bestimmtes erstes bzw. zweites Klingelsignal bei der Mittelung berücksichtigt, so wird ein anderes erstes bzw. zweites Klingelsignal dafür aus der Mittelung entfernt.

Gemäß einer weiteren Ausgestaltung des erfindungsgemäßen Verfahrens wird das wenigstens eine neu erfasste erste Klingelsignal des ersten Ultraschallwandlers und/oder das wenigstens eine neu erfasste zweite Klingelsignal des zweiten Ultraschallwandlers, insbesondere im Hinblick auf Änderungen von Prozessbedingungen und/oder die Art und/oder den Zustand des ersten bzw. des zweiten Ultraschallwandlers, ausgewertet.

Beispielsweise kann das neu erfasste erste Klingelsignal mit dem ersten Klingelentstörsignal verglichen werden und/oder das neu erfasste zweite Klingelsignal kann mit dem zweiten Klingelentstörsignal verglichen werden. Abweichungen zwischen dem erfassten ersten Klingelsignal und dem ersten Klingelentstörsignal bzw. zwischen dem erfassten zweiten Klingelsignal und dem zweiten Klingelentstörsignal können auf Änderungen der Prozessbedingungen und/oder oder auf Zustandsänderungen des jeweiligen Ultraschallwandlers hinweisen.

Besonders bevorzugt wird dem Nutzer eine entsprechende Meldung ausgegeben, sofern unter Berücksichtigung eines Toleranzbereiches eine Abweichung zwischen dem neu erfassten ersten Klingelsignal und dem Klingelentstörsignal bzw. zwischen dem neu erfassten zweiten Klingelsignal und dem Klingelentstörsignal vorliegt.

Diese Ausgestaltung weist den Vorteil auf, dass das eigentlich unerwünschte Klingelsignal in vorteilhafter Weise für die Überwachung des Messprozesses bzw. des Zustandes eines Ultraschallwandlers oder auch zur Bestimmung der Art des Ultraschallwandlers Weise genutzt werden kann.

Besonders bevorzugt wird eine Frequenzanalyse, insbesondere mittels einer Fast Fourier Transformation (FFT), des wenigstens einen neu erfassten ersten Klingelsignals und/oder des wenigstens einen neu erfassten zweiten Klingelsignals durchgeführt, wobei aus dem Frequenzspektrum des ersten Klingelsignals und/oder aus dem Frequenzspektrum des zweiten Klingelsignals wenigstens ein Vergleichsparameter abgeleitet wird und wobei der Wert des Vergleichsparameters mit in der Steuer- und Auswerteeinheit für das erste Klingelsignal bzw. für das zweite Klingelsignal hinterlegten Werten verglichen wird.

Gemäß einer Ausgestaltung ist ein Vergleichsparameter die Amplitude von festgelegten Frequenzen. Eine Änderung der Amplitude dieser Frequenzen im Verlauf einer Messung kann auf Änderungen des Vibrationsverhaltens des Ultraschallwandlers zurückzuführen sein und insofern beispielsweise auf eine Alterung des Ultraschallwandlers hindeuten.

Ein anderer Vergleichsparameter ist beispielsweise der Wert der Frequenz, die die maximale Amplitude aufweist.

Gemäß einer weiteren Ausgestaltung wird aus dem gemessenen Klingelsignal unmittelbar wenigstens ein Vergleichsparameter abgeleitet oder es eine Mehrzahl an charakteristischen Vergleichsparametern abgeleitet, die in einer Matrix zusammengefasst werden. Die Matrix an sich und/oder die Matrix charakterisierende Werte, wie beispielsweise die Determinante der Matrix, wird bzw. werden gemäß dieser Ausgestaltung mit in der Steuer- und Auswerteeinheit hinterlegten Referenzwerten verglichen. Besonders bevorzugt sind die Referenzwerte basierend auf wenigstens einer Messung des ersten Klingelsignal bzw. des zweiten Klingelsignals vor der Durchflussmessung, besonders bevorzugt bei Inbetriebnahme des Durchflussmessgeräts, festgelegt.

Gemäß einer weiteren Ausgestaltung wird im Verlauf einer Messung in regelmäßigen oder unregelmäßigen Abständen das erste Klingelsignal des Ultraschallwandlers und/oder das zweite Klingelsignal des zweiten Ultraschallwandlers unabhängig von der Aktualisierung des ersten und/oder des zweiten Klingelentstörsignals neu erfasst und im Hinblick auf Änderungen in dem jeweiligen Klingelsignal ausgewertet.

Trotz der Bereinigung des ersten und/oder des zweiten Überlagerungssignals um das erste bzw. zweite Klingelentstörsignal ist es möglich, dass das erste und/oder das zweite Korrektursignal weiterhin ein Störsignal aufweist, dessen Amplitude zwar wesentlich kleiner als die Amplitude des Klingelmesssignals ist, das sich aber dennoch auf die Messgenauigkeit auswirkt. Im Detail weist gemäß dieser Ausgestaltung das erste Korrektursignal ein erstes Störsignal auf und/oder das zweite Korrektursignal weist ein zweites Störsignal auf.

Dieses erste bzw. zweite Störsignal kann dadurch beseitigt oder zumindest reduziert werden, dass der erste Ultraschallwandler im Verlauf der Messung das Messsignal mit einem variierenden Zeitversatz ±T empfängt, sodass das erste Störsignal das erste Korrektursignal an gleichen Stellen im Verlauf der Messung sowohl positiv als negativ überlagert und/oder dass der zweite Ultraschallwandler im Verlauf der Messung das Messsignal mit einem variierenden Zeitversatz ±T empfängt, sodass das zweite Störsignal das zweite Korrektursignal an gleichen Stellen im Verlauf der Messung sowohl positiv als negativ überlagert.

Hierzu sendet gemäß einer Ausgestaltung der erste Ultraschallwandler das erste Messsignal mit einem variierenden Zeitversatz ±T in Bezug auf die Aussendung des zweiten Messsignal aus, sodass das erste Messsignal einen Zeitversatz ±T zu dem zweiten Klingelmesssignal des zweiten Ultraschallwandlers aufweist und/oder der zweite Ultraschallwandler sendet das zweite Messsignal mit einem variierendem Zeitversatz ±T in Bezug auf die Aussendung des ersten Messsignals aus, sodass das zweite Messsignal einen Zeitversatz ±T in Bezug auf das erste Klingelmesssignal des ersten Ultraschallwandlers aufweist.

Besonders bevorzugt sendet während einer Messung genau ein Ultraschallwandler des Ultraschallwandlerpaars das Messsignal mit variierendem Zeitversatz aus. Sofern beide Ultraschallwandler ihre Messsignale mit einem variierenden Zeitversatz aussenden, werden die Ultraschallwandler derart angesteuert, dass sie nicht gleichzeitig ihre Messsignale mit variierendem Zeitversatz aussenden. Vielmehr sendet während einer ersten Messdauer der erste Ultraschallwandler das erste Messsignal mit einem variierenden Zeitversatz aus und während einer zweiten Messdauer sendet der zweiter Ultraschallwandler das zweite Messsignal mit einem variierenden Zeitversatz aus.

Besonders bevorzugt sendet der erste Ultraschallwandler das erste Messsignal abwechselnd verzögert, d.h. mit positivem Zeitversatz +T, und zeitlich vor dem zweiten Ultraschallwandler, d.h. mit negativem Zeitversatz -T, aus. Gemäß einer alternativen Ausgestaltung sendet der zweite Ultraschallwandler das zweite Messsignal abwechselnd verzögert, d.h. mit positivem Zeitversatz +T, und zeitlich vor dem ersten Ultraschallwandler, d.h. mit negativem Zeitversatz -T, aus.

Gemäß einer besonders bevorzugten Ausgestaltung entspricht der Zeitversatz T zwischen der Aussendung des ersten und des zweiten Messsignals eine halbe Periode des ersten bzw. des zweiten Messsignals.

Gemäß einer nächsten Ausgestaltung beträgt der Zeitversatz T zwischen der Aussendung des ersten und des zweiten Messsignals ungefähr 1 ms.

Die zuvor beschriebenen Ausgestaltungen haben den weiteren Vorteil, dass sich das verbliebene erste bzw. zweite Störsignal im Verlauf der Messung durch die sowohl positiv als auch negative Überlagerung mit dem Korrektursignal herausmittelt.

Gemäß einer zweiten Lehre der vorliegenden Erfindung wird die eingangs dargelegte Aufgabe durch ein Ultraschall-Durchflussmessgerät mit wenigstens einem ersten Ultraschallwandler, wobei der erste Ultraschallwandler als Sendeeinheit und als Empfangseinheit ausgebildet ist, und
mit einem Messrohr, wobei das Messrohr im Betrieb von einem Medium durchströmt wird, und
mit einer Steuer- und Auswerteeinheit zur Ansteuerung von zumindest dem ersten Ultraschallwandler und zur Bestimmung der Strömungsgeschwindigkeit bzw. des Durchflusses des Mediums aufweist, dadurch gelöst, dass das Ultraschall-Durchflussmessgerät dazu ausgestaltet ist, im Betrieb eines der zuvor beschriebenen Verfahren durchzuführen.

Besonders bevorzugt weist das Ultraschall-Durchflussmessgerät wenigstens einen ersten Ultraschallwandler und einen zweiten Ultraschallwandler auf, wobei der erste und der zweite Ultraschallwandler jeweils als Sendeeinheit und als Empfangseinheit ausgebildet sind und wobei der erste und der zweite Ultraschallwandler in Strömungsrichtung zueinander versetzt an dem Messrohr angeordnet sind.

Sind wenigstens zwei Ultraschallwandler vorhanden, so ist es besonders bevorzugt, wenn zur Erhöhung der Messgenauigkeit die Überlagerungssignale von beiden Ultraschallwandlern um die Ultraschallwandler eigenen Klingelsignale bereinigt werden.

Im Einzelnen gibt es nun eine Vielzahl von Möglichkeiten, das erfindungsgemäße Verfahren und das erfindungsgemäße Ultraschall-Durchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel eines erfindungsgemäßen Ultraschall-Durchflussmessgeräts,
- Fig. 2: ein Ausführungsbeispiel eines erfindungsgemäßen Verfahrens,
- Fig. 3: ein weiteres Ausführungsbeispiel eines erfindungsgemäßen Verfahrens,
- Fig. 4: ein weiteres Ausführungsbeispiel eines erfindungsgemäßen Verfahrens,
- Fig. 5: die graphische Darstellung einer Messsignalbereinigung,
- Fig. 6: ein weiteres Ausführungsbeispiel eines erfindungsgemäßen Verfahrens
- Fig. 7: ein weiteres Ausführungsbeispiel eines Ultraschall-Durchflussmessgeräts.

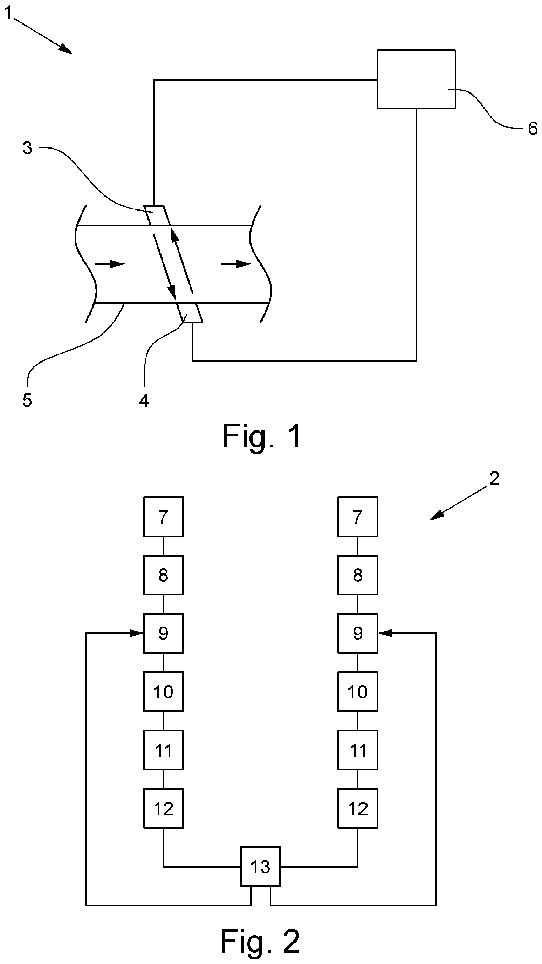

Fig. 1 zeigt ein Ausführungsbeispiel eines Ultraschall-Durchflussmessgeräts 1, wobei das Ultraschall-Durchflussmessgerät 1 ein Ultraschallwandlerpaar bestehend aus einem ersten Ultraschallwandler 3 und einem zweiten Ultraschallwandler 4 aufweist. Die Ultraschallwandler 3 und 4 sind in Strömungsrichtung zueinander versetzt an einem Messrohr 5 angeordnet. Im dargestellten Ausführungsbeispiel ist die Strömungsrichtung durch Pfeile dargestellt.

Beide Ultraschallwandler 3 und 4 sind sowohl als Sendeeinheit als auch als Empfangseinheit ausgebildet. Im Betrieb empfängt der zweite Ultraschallwandler 4 das von dem ersten Ultraschallwandler 3 ausgesendete erste Messsignal und der erste Ultraschallwandler 3 empfängt das von dem zweiten Ultraschallwandler 4 ausgesendete zweite Messsignal. Im Ergebnis verlaufen im Betrieb damit jeweils ein Messsignal in Strömungsrichtung und ein Messsignal entgegen der Strömungsrichtung. Aus dem Laufzeitunterschied kann die Strömungsgeschwindigkeit sowie der Durchfluss des Mediums durch das Messrohr 5 bestimmt werden. Im dargestellten Ausführungsbeispiel ist der erste Ultraschallwandler 3 derart angeordnet, dass er das erste Messsignal in Strömungsrichtung aussendet und der zweite Ultraschallwandler 4 ist derart angeordnet, dass er das zweite Messsignal entgegen der Strömungsrichtung aussendet.

Zudem weist das Ultraschall-Durchflussmessgerät 1 eine Steuer- und Auswerteeinheit 6 auf, die mit dem ersten Ultraschallwandler 3 und dem zweiten Ultraschallwandler 4 verbunden ist. Die Steuer- und Auswerteeinheit 6 steuert die Ultraschallwandler 3 und 4 und bestimmt weiterhin aus den Laufzeiten der Messsignale den Durchfluss des Mediums. Die Steuer- und Auswerteeinheit 6 ist im dargestellten Ausführungsbeispiel zur Durchführung eines erfindungsgemäßen Verfahrens 2 ausgestaltet, nach dem die an den Ultraschallwandlern 3 und 4 entstehenden Überlagerungssignale 15, die eine Überlagerung der Empfangssignale mit den eigenen Klingelmessignalen aufweisen, um die Klingelentstörsignale 16 bereinigt werden. Im Ergebnis weist das dargestellte Ultraschall-Durchflussmessgerät 1 eine besonders hohe Messgenauigkeit auf.

Fig. 2 zeigt ein erstes Ausführungsbeispiel eines erfindungsgemäßen Verfahrens 2 zum Betreiben eines Ultraschall-Durchflussmessgeräts 1. Das Ultraschall-Durchflussmessgerät 1 ist gemäß dem in Fig. 1 dargestellten Ausführungsbeispiel ausgebildet.

Das dargestellte Verfahren 2 umfasst die folgenden Schritte, wobei die einzelnen Verfahrensschritte für den ersten Ultraschallwandler 3 und den zweiten Ultraschallwandler 4 getrennt dargestellt sind:
Zunächst wird ein erstes Klingelsignal des ersten Ultraschallwandlers 3 erfasst 7 und basierend auf dem ersten Klingelsignal wird ein erstes Klingelentstörsignal 16 bestimmt 8. Im dargestellten Ausführungsbeispiel entspricht das erste Klingelentstörsignal 16 dem ersten erfassten Klingelsignal. Dieses erste Klingelentstörsignal 16 wird in der Steuer- und Auswerteeinheit 6 hinterlegt und bei der Auswertung der empfangenen Messsignale herangezogen.

Zudem wird ein zweites Klingelsignal des zweiten Ultraschallwandlers 4 erfasst 7 und basierend auf dem zweiten Klingelsignal wird ein zweites Klingelentstörsignal 16 bestimmt 8. Im dargestellten Ausführungsbeispiel entspricht das zweite Klingelentstörsignal 16 dem zweiten erfassten Klingelsignal. Dieses zweite Klingelentstörsignal 16 wird ebenfalls in der Steuer- und Auswerteeinheit 6 hinterlegt und bei der Auswertung der empfangenen Messsignale herangezogen.

In einem nächsten Schritt sendet 9 der erste Ultraschallwandler 3 ein erstes Messsignal in das Medium aus, wobei in dem ersten Ultraschallwandler 3 durch Reflexionen und fortdauernde Vibrationen ein erstes Klingelmesssignal entsteht. Im Wesentlichen zeitgleich sendet der zweite Ultraschallwandler 4 ein zweites Messsignal in das Medium aus, wobei in dem zweiten Ultraschallwandler 4 durch Reflexionen und fortdauernde Vibrationen ein zweites Klingelmesssignal entsteht.

Anschließend empfängt 10 der erste Ultraschallwandler 3 das zweite Messsignal als erstes Empfangssignal. Das erste Empfangssignal überlagert sich 11 mit dem ersten Klingelmesssignal zu einem ersten Überlagerungssignal 15.

Der zweite Ultraschallwandler 4 empfängt das erste Messsignal als zweites Empfangssignal. Das zweite Empfangssignal überlagert sich 11 mit dem zweiten Klingelmesssignal zu einem zweiten Überlagerungssignal 15.

In einem nächsten Schritt wird für den ersten Ultraschallwandler 3 ein erstes Korrektursignal 17 durch Subtraktion des ersten Klingelentstörsignals 16 von dem ersten Überlagerungssignal 15 bestimmt 12.

Zudem wird für den zweiten Ultraschallwandler 4 ein zweites Korrektursignal 17 durch Subtraktion des zweiten Klingelentstörsignals 16 von dem zweiten Überlagerungssignal 15 bestimmt 12.

Aus dem ersten und dem zweiten Korrektursignal wird in einem nächsten Schritt der Durchfluss des Mediums bestimmt 13.

Anschließend wird die Durchflussmessung beginnend mit der Aussendung 9 der Messsignale erneut durchgeführt.

Im dargestellten Ausführungsbeispiel des erfindungsgemäßen Verfahrens sind die Klingelentstörsignale 16 unveränderliche Signale, die einmalig vor der Messung bestimmt werden.

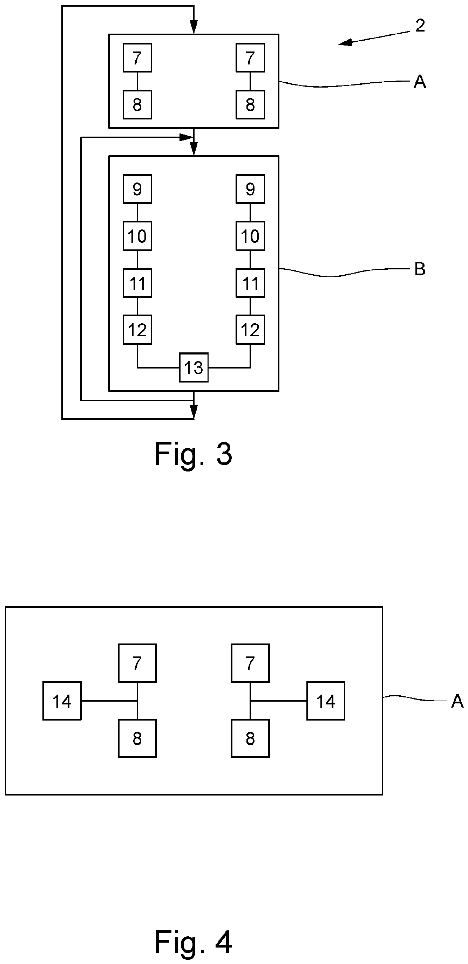

Fig. 3 zeigt ein nächstes Ausführungsbeispiel eines erfindungsgemäßen Verfahrens 2. Das Ultraschall-Durchflussmessgerät 1 ist ebenfalls wie in Fig. 1 dargestellt ausgebildet, im Detail weist das Ultraschall-Durchflussmessgerät 1 einen ersten Ultraschallwandler 3 und einen zweiten Ultraschallwandler 4 auf, die entsprechend dem erfindungsgemäßen Verfahren 2 betrieben werden.

In einem ersten Messabschnitt A wird eine Mehrzahl von ersten Klingelsignalen des ersten Ultraschallwandlers 3 gemessen 7. Zudem wird durch Mittelung der Mehrzahl an ersten gemessenen Klingelsignalen ein erstes Klingelentstörsignal 16 bestimmt.

Ebenfalls wird eine Mehrzahl von zweiten Klingelsignalen des zweiten Ultraschallwandlers 4 gemessen 7 und aus diesen gemessenen zweiten Klingelsignalen wird durch deren Mittelung ein zweites Klingelentstörsignal 16 bestimmt.

Anschließend wird der Messabschnitt B zur Durchflussmessung durchgeführt. In diesem Messabschnitt B sendet der erste Ultraschallwandler 3 ein erstes Messsignal aus 9, wobei in dem ersten Ultraschallwandler 3 ein erstes Klingelmesssignal entsteht und der zweite Ultraschallwandler 4 sendet ein zweites Messsignal aus 9, wobei in dem zweiten Ultraschallwandler 4 ein zweites Klingelmesssignal entsteht.

In einem nächsten Schritt empfängt 10 der erste Ultraschallwandler 3 das zweite Messsignal als erstes Empfangssignal und der zweite Ultraschallwandler 4 empfängt das erste Messsignal als zweites Empfangssignal.

In dem ersten Ultraschallwandler 3 überlagern sich 11 das erste Empfangssignal und das erste Klingelmesssignal und in dem zweiten Ultraschallwandler 4 überlagern sich 11 das zweite Empfangssignal und das zweite Klingelmesssignal.

Anschließend wird durch Subtraktion des ersten Klingelentstörsignals 16 von dem ersten Überlagerungssignal 15 ein erstes Korrektursignal 17 des ersten Ultraschallwandlers bestimmt 12 und durch Subtraktion des zweiten Klingelentstörsignals 16 von dem zweiten Überlagerungssignal 15 wird ein zweites Korrektursignal 17 von dem zweiten Ultraschallwandler 4 bestimmt 12.

Aus dem ersten Korrektursignal 17 und dem zweiten Korrektursignal 17 wird in einem nächsten Schritt der Durchfluss bestimmt 13.

Der Messabschnitt B wird gemäß dem dargestellten Verfahren 2 mehrfach durchgeführt. Nach einer mehrfachen Durchführung des Messabschnitts B wird in regelmäßigen oder unregelmäßigen Abständen der Messabschnitt A erneut durchlaufen, um das erste Klingelentstörsignal 16 und das zweite Klingelentstörsignal 16 zu aktualisieren. Hierzu wird ein weiteres erstes Klingelsignal des ersten Ultraschallwandlers 3 und ein weiteres zweites Klingelsignal des zweiten Ultraschallwandlers 4 gemessen 7. Das neu gemessene erste Klingelsignal wird bei der anschließenden Mittelung 8 über die Mehrzahl an gemessenen ersten Klingelsignalen zur Aktualisierung des ersten Klingelentstörsignals 16 besonders hoch gewichtet. Das neu gemessene zweite Klingelsignal wird bei der anschließenden Mittelung 8 über die Mehrzahl an gemessenen zweiten Klingelsignalen zur Aktualisierung des zweiten Klingelentstörsignals 16 besonders hoch gewichtet.

In dem sich anschließenden Messabschnitt B wird nun das jeweils aktualisierte erste bzw. zweite Klingelentstörsignal 16 zur Bestimmung des ersten bzw. zweiten Korrektursignals 17 zugrunde gelegt.

In Fig. 4 ist ein weiteres Ausführungsbeispiel des Messabschnitts A zur Aktualisierung des ersten bzw. des zweiten Klingelentstörsignals 16 dargestellt. Wie bereits zuvor beschrieben, wird zunächst ein erstes Klingelsignal des ersten Ultraschallwandlers 3 und ein zweites Klingelsignal des zweiten Ultraschallwandlers 4 bestimmt. Das erste neu gemessene Klingelsignal wird nun separat ausgewertet 14. Im Detail wird das neu gemessene Klingelsignal mit einem in der Steuer- und Auswerteeinheit 6 hinterlegten Signal im Hinblick auf Veränderungen verglichen. Zudem wird das neu gemessene zweite Klingelsignal mit einem in der Steuer- und Auswerteeinheit 6 hinterlegten Signal im Hinblick auf Veränderungen verglichen.

Beispielsweise wird das neu gemessene erste Klingelsignal mit dem hinterlegten ersten Klingelentstörsignal 16 verglichen und das neu gemessene zweite Klingelsignal wird mit dem hinterlegten zweiten Klingelentstörsignal 16 verglichen.

Hierzu wird eine Frequenzanalyse des ersten neu gemessenen Klingelsignals bzw. des zweiten neu gemessenen Klingelsignals durchgeführt und aus dem Frequenzspektrum wird jeweils wenigstens ein Vergleichsparameter abgeleitet. Der Wert des Vergleichsparameters wird mit dem entsprechenden Wert des Vergleichsparameters des aus dem ersten Klingelentstörsignals 16 bzw. aus dem zweiten Klingelentstörsignals 16 abgeleiteten Frequenzspektrums verglichen. Eine Änderung im Wert des Vergleichsparameters ist ein Hinweis auf eine Änderung des Zustandes des Ultraschallwandlers und/oder ein Hinweis auf eine Änderung von Prozessbedingungen. Besonders bevorzugt wird im Fall einer Änderung des Vergleichsparameters dem Nutzer eine entsprechende Meldung ausgegeben.

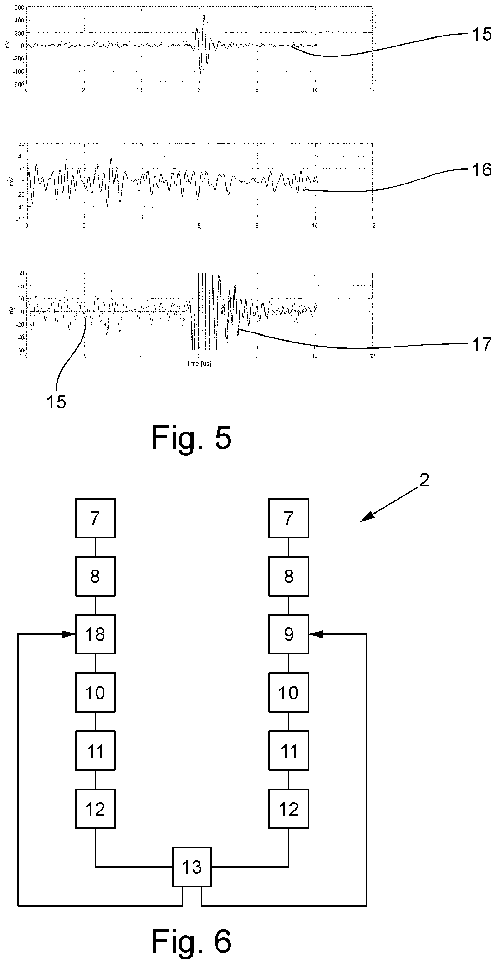

In Fig. 5 ist ein Ausführungsbeispiel der im Rahmen der vorliegenden Erfindung relevanten Klingelsignale dargestellt. In der oberen Grafik ist ein Ausführungsbeispiel eines Überlagerungssignals dargestellt, das eine Überlagerung aus einem Klingelmesssignal und einem Empfangssignal aufweist.

In der mittleren Grafik ist ein Klingelsignal, das ein Klingelentstörsignal 16 definiert, dargestellt.

In der unteren Grafik sind sowohl das Überlagerungssignal 15 als auch das Korrektursignal 17, das sich aus der Subtraktion des Klingelentstörsignals 16 von dem Überlagerungssignal ergibt.

In der mittleren und unteren Grafik ist hierbei gegenüber der oberen Grafik eine andere vertikale Skalierung gewählt worden, um das Signal besser darstellen zu können.

In Fig. 6 ist ein weiteres Ausführungsbeispiel eines erfindungsgemäßen Verfahrens 2 dargestellt. Dabei ist das Ultraschall-Durchflussmessgerät 1 wie in Fig. 1 dargestellt ausgestaltet. Das dargestellte Verfahren 2 berücksichtigt, dass auch nach der Bestimmung des Korrektursignals 17, das Korrektursignal ein Störsignal enthalten kann, das beispielsweise auf der begrenzten Abtastrate / Auflösung beruht.

Zunächst wird, wie bereits beschrieben, wenigstens ein erstes Klingelsignal des ersten Ultraschallwandlers 3 und wenigstens ein zweites Klingelsignal des zweiten Ultraschallwandlers 4 bestimmt 7. Aus dem wenigstens einen ersten Klingelsignal wird ein erstes Klingelentstörsignal 16 bestimmt 8 und aus dem wenigstens einen zweiten Klingelsignal wird ein zweites Klingelentstörsignal 16 bestimmt 8.

In der sich anschließenden Messung des Durchflusses sendet 18 der erste Ultraschallwandler 3 ein erstes Messsignal mit einer zeitlichen Verzögerung +T im Vergleich zum Zeitpunkt der Aussendung des zweiten Messsignals durch den zweiten Ultraschallwandler 4.

In der darauffolgenden Durchflussmessung sendet der erste Ultraschallwandler 3 das erste Messsignal zeitlich vor der Aussendung des zweiten Messsignals durch den zweiten Ultraschallwandler 4 aus.

Dies bewirkt, dass am zweiten Ultraschallwandler 4 das zweite Störsignal sich mit dem zweiten Korrektursignal an gleichen Stellen sowohl positiv als auch negativ überlagert, sodass das verbleibende Störsignal über eine Vielzahl von Messungen herausgemittelt wird.

Die Messgenauigkeit des dargestellten Ausführungsbeispiels ist damit besonders hoch.

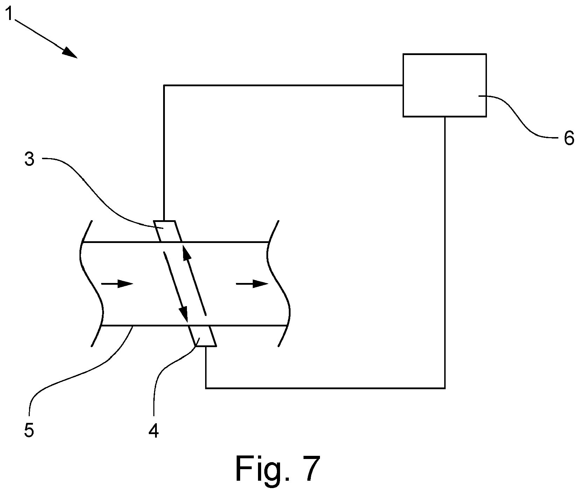

In Fig. 7 ist ein weiteres Ausführungsbeispiel eines Ultraschall-Durchflussmessgeräts 1 dargestellt. Im Unterschied zu dem in Fig. 1 dargestellten Ausführungsbeispiel weist das Ultraschall-Durchflussmessgerät 1 einen Ultraschallwandler 3 auf, der sowohl als Sendeeinheit als auch als Empfangseinheit ausgebildet ist und der mit dem erfindungsgemäßen Verfahren betrieben wird. Darüber hinaus weist das Ultraschall-Durchflussmessgerät 1 einen zweiten Ultraschallwandler 4 auf, der lediglich als Empfänger ausgebildet ist und der das von dem ersten Ultraschallwandler 3 ausgesendete Messsignal reflektiert.

Sämtliche zuvor beschriebene Ausführungsbeispiele des erfindungsgemäßen Verfahrens können ebenso auch nur mit dem ersten Ultraschallwandler 3 durchgeführt werden. Insofern wird hinsichtlich der konkreten Ausführungsbeispiele des erfindungsgemäßen Verfahrens 2 in Zusammenhang mit dem in Fig. 7 dargestellten Ultraschall-Durchflussmessgerät 1 auf jeweils einen Verfahrensablauf der in den Fig. 2 bis 4 und 6 beschriebenen Verfahren verwiesen.

### Bezugszeichen

- 1: Ultraschall-Durchflussmessgerät
- 2: Verfahren zum Betreiben eines Ultraschall-Durchflussmessgeräts
- 3: erster Ultraschallwandler
- 4: zweiter Ultraschallwandler
- 5: Messrohr
- 6: Steuer- und Auswerteeinheit
- 7: Erfassung von wenigstens einem Klingelsignal
- 8: Bestimmung eines Klingelentstörsignals
- 9: Aussenden eines Messsignals in das Medium
- 10: Empfang des Messsignals
- 11: Überlagerung mit dem Klingelmesssignal
- 12: Bestimmung des Korrektursignals
- 13: Bestimmung des Durchflusses
- 14: Auswertung des gemessenen Klingelsignals
- 15: Überlagerungssignal
- 16: Klingelentstörsignal
- 17: Korrektursignal
- 18: Aussendung des Messsignals mit Zeitversatz

## Patentansprüche

1. Verfahren (2) zum Betreiben eines Ultraschall Durchflussmessgeräts (1),
wobei das Ultraschall-Durchflussmessgerät (1) wenigstens einen ersten Ultraschallwandler (3), wobei der erste Ultraschallwandler (3) als Sendeeinheit und als Empfangseinheit ausgebildet ist, und
ein Messrohr (5), wobei das Messrohr (5) im Betrieb von einem Medium durchströmt wird, und
eine Steuer- und Auswerteeinheit (6) zur Ansteuerung von zumindest dem ersten Ultraschallwandler (3) und zur Bestimmung der Strömungsgeschwindigkeit bzw. des Durchflusses des Mediums aufweist,
wobei das Verfahren (2) die folgenden Schritte umfasst:
- Erfassung (7) von wenigstens einem ersten Klingelsignal des ersten Ultraschallwandlers und Bestimmung (8) eines ersten Klingelentstörsignals (16) basierend auf dem wenigstens einen erfassten ersten Klingelsignal,
- Aussenden (9) eines ersten Messsignals in das Medium durch den ersten Ultraschallwandler (3), wobei ein erstes Klingelmesssignal im ersten Ultraschallwandler (3) entsteht,
- Empfang (10) eines Messsignals als erstes Empfangssignal durch den ersten Ultraschallwandler (3), wobei sich das erste Empfangssignal und das erste Klingelmesssignal zu einem ersten Überlagerungssignal (15) überlagern (11),
- Bestimmung (12) eines ersten Korrektursignals (17) durch Subtraktion des ersten Klingelentstörsignals (16) von dem ersten Überlagerungssignal (15) und
- Bestimmung (13) der Strömungsgeschwindigkeit bzw. des Durchflusses basierend auf dem ersten Korrektursignal (17).

2. Verfahren (2) nach Anspruch 1, wobei das Ultraschall-Durchflussmessgerät (1) wenigstens einen ersten Ultraschallwandler (3) und einen zweiten Ultraschallwandler (4) aufweist, wobei der erste Ultraschallwandler (3) und der zweite Ultraschallwandler (4) jeweils als Sendeeinheit und als Empfangseinheit ausgebildet sind und wobei der erste Ultraschallwandler (3) und der zweite Ultraschallwandler (4) in Strömungsrichtung zueinander versetzt an dem Messrohr (5) angeordnet sind, **dadurch gekennzeichnet,**
**dass** das Verfahren (2) die folgenden Schritte umfasst:
- Erfassung (7) von wenigstens einem ersten Klingelsignal des ersten Ultraschallwandlers (3) und Bestimmung (8) eines ersten Klingelentstörsignals (16) basierend auf dem wenigstens einen erfassten ersten Klingelsignal und/oder
- Erfassung (7) von wenigstens einem zweiten Klingelsignal des zweiten Ultraschallwandlers (4) und Bestimmung (8) eines zweiten Klingelentstörsignals (16) basierend auf dem wenigstens einen erfassten zweiten Klingelsignal,
- Aussenden (9) eines ersten Messsignals in das Medium durch den ersten Ultraschallwandler (3), wobei ein erstes Klingelmesssignal im ersten Ultraschallwandler (3) entsteht,
- Aussenden (9) eines zweiten Messsignals in das Medium durch den zweiten Ultraschallwandler (4), wobei ein zweites Klingelmesssignal im zweiten Ultraschallwandler (4) entsteht,
- Empfang (10) des zweiten Messsignals als erstes Empfangssignal durch den ersten Ultraschallwandler (3), wobei sich das erste Empfangssignal und das erste Klingelmesssignal zu einem ersten Überlagerungssignal (15) überlagern (11),
- Empfang (10) des ersten Messsignals als zweites Empfangssignal durch den zweiten Ultraschallwandler (4), wobei sich das zweite Empfangssignal und das zweite Klingelmesssignal zu einem zweiten Überlagerungssignal (15) überlagern (11),
- Bestimmung (12) eines ersten Korrektursignals (17) durch Subtraktion des ersten Klingelentstörsignals (16) von dem ersten Überlagerungssignal (15) und/oder
- Bestimmung (12) eines zweiten Korrektursignals (17) durch Subtraktion des zweiten Klingelentstörsignals (16) von dem zweiten Überlagerungssignal (1 5) und
- Bestimmung (13) der Strömungsgeschwindigkeit bzw. des Durchflusses basierend auf dem ersten und/oder dem zweiten Korrektursignal (17).

3. Verfahren (2) nach Anspruch 2, **dadurch gekennzeichnet, dass** der erste Ultraschallwandler (3) und der zweite Ultraschallwandler (4) im Wesentlichen zeitgleich das erste Messsignal und das zweite Messsignal aussenden.

4. Verfahren (2) nach einem der Ansprüche 1 bis 3, **dadurch gekennzeichnet, dass** während einer Messung in regelmäßigen oder unregelmäßigen Abständen das erste Klingelentstörsignal (16) des ersten Ultraschallwandlers (3) und/oder das zweite Klingelentstörsignal (16) des zweiten Ultraschallwandlers (4) aktualisiert wird.

5. Verfahren (2) nach einem der Ansprüche 1 bis 4, **dadurch gekennzeichnet, dass** das erste Klingelentstörsignal (16) einer Mittelung über eine Mehrzahl von Einzelmessungen von ersten Klingelsignalen des ersten Ultraschallwandlers (3) entspricht und/oder dass das zweite Klingelentstörsignal (16) einer Mittelung über eine Mehrzahl von Einzelmessungen von zweiten Klingelsignalen des zweiten Ultraschallwandlers (4) entspricht.

6. Verfahren (2) nach Anspruch 5, **dadurch gekennzeichnet, dass** zur Aktualisierung des ersten Klingelentstörsignals (16) des ersten Ultraschallwandlers (3) das erste Klingelsignal während einer Messung neu erfasst wird, wobei vorzugsweise ein Zeitpunkt verwendet wird, an dem der zweite Ultraschallwandler keine Messsignale erzeugt, und dass das erste Klingelentstörsignal (16) unter Berücksichtigung des neu erfassten ersten Klingelsignals aktualisiert wird und/oder zur Aktualisierung des zweiten Klingelentstörsignals (16) des zweiten Ultraschallwandlers (14) das zweite Klingelsignal während einer Messung neu erfasst wird, wobei vorzugsweise ein Zeitpunkt verwendet wird, an dem der erste Ultraschallwandler keine Messsignale erzeugt, und dass das zweite Klingelentstörsignal (16) unter Berücksichtigung des neu erfassten zweiten Klingelsignals aktualisiert wird.

7. Verfahren (2) nach Anspruch 5 oder 6, **dadurch gekennzeichnet, dass** zur Aktualisierung des ersten Klingelentstörsignals (16) die Mittelung mehrerer Einzelmessungen unter Berücksichtigung des neu erfassten ersten Klingelsignals neu bestimmt wird, wobei vorzugsweise das neu erfasste erste Klingelsignal besonders hoch gewichtet wird und/oder dass zur Aktualisierung des zweiten Klingelentstörsignals (16) die Mittelung mehrerer Einzelmessungen unter Berücksichtigung des neu erfassten zweiten Klingelsignals neu bestimmt wird, wobei vorzugsweise das neu erfasste zweite Klingelsignal besonders hoch gewichtet wird.

8. Verfahren (2) nach einem der Ansprüche 1 bis 7, **dadurch gekennzeichnet, dass** das wenigstens eine neu erfasste erste Klingelsignal des ersten Ultraschallwandlers (3) und/oder das wenigstens eine neu erfasste zweite Klingelsignal des zweiten Ultraschallwandlers (4), insbesondere im Hinblick auf den Zustand des ersten Ultraschallwandlers (3) bzw. des zweiten Ultraschallwandlers (4), ausgewertet wird bzw. werden.

9. Verfahren (2) nach Anspruch 8, **dadurch gekennzeichnet, dass** eine Frequenzanalyse des wenigstens einen neu erfassten ersten Klingelsignals und/oder des wenigstens einen neu erfassten zweiten Klingelsignals durchgeführt wird und dass aus dem Frequenzspektrum des ersten Klingelsignals und/oder aus dem Frequenzspektrum des zweiten Klingelsignals ein Vergleichsparameter abgeleitet wird, und dass der Wert des Vergleichsparameters mit in der Steuer- und Auswerteeinheiten (6) für das erste Klingelsignal bzw. für das zweite Klingelsignal hinterlegten Werten verglichen wird.

10. Verfahren (2) nach einem der Ansprüche 1 bis 9, **dadurch gekennzeichnet, dass** das erste Korrektursignal (17) ein erstes Störsignal aufweist und/oder das zweite Korrektursignal (17) ein zweites Störsignal aufweist, dass der erste Ultraschallwandler (3) im Verlauf der Messung das Messsignal mit einem variierenden Zeitversatz ±T empfängt, sodass das erste Störsignal das erste Korrektursignal (17) an gleichen Stellen im Verlauf der Messung sowohl positiv als negativ überlagert und/oder dass der zweite Ultraschallwandler (4) im Verlauf der Messung das Messsignal mit einem variierenden Zeitversatz ±T empfängt, sodass das zweite Störsignal das zweite Korrektursignal (17) an gleichen Stellen im Verlauf der Messung sowohl positiv als negativ überlagert.

11. Verfahren (2) nach Anspruch 10, **dadurch gekennzeichnet, dass** der erste Ultraschallwandler (3) das erste Messsignal mit einem variierenden Zeitversatz ±T in Bezug auf die Aussendung des zweiten Messsignals aussendet, sodass das erste Messsignal einen Zeitversatz ±T zu dem zweiten Klingelmesssignal des zweiten Ultraschallwandlers (4) aufweist und/oder dass der zweite Ultraschallwandler (4) das zweite Messsignal mit einem variierenden Zeitversatz ±T in Bezug auf die Aussendung des ersten Messsignals aussendet, sodass das zweite Messsignal einen Zeitversatz ±T in Bezug auf das erste Klingelmesssignal des ersten Ultraschallwandlers (3) aufweist.

12. Verfahren (2) nach Anspruch 10 oder 11, **dadurch gekennzeichnet, dass** der Zeitversatz T zwischen der Aussendung des ersten und des zweiten Messsignals einer halben Periode des ersten bzw. des zweiten Messsignals entspricht.

13. Verfahren (2) nach Anspruch 11 oder 12, **dadurch gekennzeichnet, dass** der erste Ultraschallwandler das erste Messsignal abwechselnd verzögert, d.h. mit positivem Zeitversatz +T, und zeitlich vor der Aussendung des zweiten Messsignals, d.h. mit negativem Zeitversatz -T, aussendet oder dass der zweite Ultraschallwandler das zweite Messsignal abwechselnd verzögert, d.h. mit positivem Zeitversatz +T, und zeitlich vor der Aussendung des ersten Messsignals, d.h. mit negativem Zeitversatz -T, aussendet.

14. Ultraschall-Durchflussmessgerät (1) mit wenigstens einem ersten Ultraschallwandler (3), wobei der erste Ultraschallwandler (3) als Sendeeinheit und als Empfangseinheit ausgebildet ist, und
mit einem Messrohr (5), wobei das Messrohr (5) im Betrieb von einem Medium durchströmt wird, und
mit einer Steuer- und Auswerteeinheit (6) zur Ansteuerung von zumindest dem ersten Ultraschallwandler (3) und zur Bestimmung der Strömungsgeschwindigkeit bzw. des Durchflusses des Mediums aufweist,
wobei das Ultraschall-Durchflussmessgerät (1) dazu ausgestaltet ist, im Betrieb ein Verfahren gemäß einem der Ansprüche 1 bis 13 durchzuführen.

## Claims

1. Method (2) for operating an ultrasonic flowmeter (1),
wherein the ultrasonic flowmeter (1) has at least one first ultrasonic transducer (3), wherein the first ultrasonic transducer (3) is designed as a transmitting unit and as a receiving unit, and
a measuring tube (5), wherein a medium flows through the measuring tube (5) during operation, and
a control and evaluation unit (6) for controlling at least the first ultrasonic transducer (3) and for determining the flow velocity or the flow rate of the medium,
wherein the method (2) comprises the following steps:
- capturing (7) at least one first ringing signal of the first ultrasonic transducer and detecting (8) a first ringing debugging signal (16) based on the at least one captured first ringing signal,
- emitting (9) a first measurement signal into the medium through the first ultrasonic transducer (3), wherein a first ringing measurement signal is generated in the first ultrasonic transducer (3),
- receiving (10) a measurement signal as a first received signal by the first ultrasonic transducer (3), wherein the first received signal and the first ringing measurement signal are superimposed (11) to form a first superimposed signal (15),
- determining (12) a first correction signal (17) by subtracting the first ringing debugging signal (16) from the first superposition signal (15), and
- determining (13) the flow velocity or flow rate based on the first correction signal (17).

2. Method (2) according to claim 1, wherein the ultrasonic flowmeter (1) comprises at least a first ultrasonic transducer (3) and a second ultrasonic transducer (4), wherein the first ultrasonic transducer (3) and the second ultrasonic transducer (4) are formed as a transmitting unit and as a receiving unit, respectively, and wherein the first ultrasonic transducer (3) and the second ultrasonic transducer (4) are arranged on the measuring tube (5) offset with respect to each other in the flow direction, **characterized in**
**that** the method (2) comprises the following steps:
- capturing (7) at least one first ringing signal of the first ultrasonic transducer (3) and detecting (8) a first ringing debugging signal (16) based on the at least one captured first ringing signal and/or
- capturing (7) at least one second ringing signal of the second ultrasonic transducer (4) and determining (8) a second ringing debugging signal (16) based on the at least one detected second ringing signal,
- emitting (9) a first measurement signal into the medium by the first ultrasonic transducer (3), wherein a first ringing measurement signal is generated in the first ultrasonic transducer (3),
- emitting (9) a second measurement signal into the medium by the second ultrasonic transducer (4), wherein a second ringing measurement signal is generated in the second ultrasonic transducer (4),
- receiving (10) the second measurement signal as a first received signal by the first ultrasonic transducer (3), wherein the first received signal and the first ringing measurement signal are superimposed (11) to form a first superimposed signal (15),
- receiving (10) the first measurement signal as a second received signal by the second ultrasonic transducer (4), wherein the second received signal and the second ringing measurement signal are superimposed (11) to form a second superposition signal (15),
- determining (12) a first correction signal (17) by subtracting the first ringing debugging signal (16) from the first superposition signal (15) and/or
- determining (12) a second correction signal (17) by subtracting the second ringing debugging signal (16) from the second superposition signal (15), and
- determining (13) the flow velocity or flow rate based on the first and/or the second correction signal (17).

3. Method (2) according to claim 2, **characterized in that** the first ultrasonic transducer (3) and the second ultrasonic transducer (4) emit the first measurement signal and the second measurement signal substantially simultaneously.

4. Method (2) according to any one of claims 1 to 3, **characterized in that** during a measurement, the first ringing debugging signal (16) of the first ultrasonic transducer (3) and/or the second ringing debugging signal (16) of the second ultrasonic transducer (4) is updated at regular or irregular intervals.

5. Method (2) according to any one of claims 1 to 4, **characterized in that** the first ringing debugging signal (16) corresponds to an averaging over a plurality of individual measurements of first ringing signals of the first ultrasonic transducer (3) and/or that the second ringing debugging signal (16) corresponds to an averaging over a plurality of individual measurements of second ringing signals of the second ultrasonic transducer (4).

6. Method (2) according to claim 5, **characterized in that**, in order to update the first ringing debugging signal (16) of the first ultrasonic transducer (3), the first ringing signal is captured anew during a measurement, preferably using a point in time at which the second ultrasonic transducer does not generate any measurement signals, and that the first ringing debugging signal (16) is updated taking into account the newly captured first ringing signal and/or, in order to update the second ringing debugging signal (16) of the second ultrasonic transducer (4), the second ringing signal is newly captured during a measurement, preferably using a point in time at which the first ultrasonic transducer is not generating measurement signals, and that the second ringing debugging signal (16) is updated taking into account the newly captured second ringing signal.

7. Method (2) according to claim 5 or 6, **characterized in that**, in order to update the first ringing debugging signal (16), the averaging of a plurality of individual measurements is redetermined taking into account the newly captured first ringing signal, preferably the newly captured first ringing signal being weighted particularly highly, and/or that, in order to update the second ringing debugging signal (16), the averaging of a plurality of individual measurements is redetermined taking into account the newly captured second ringing signal, preferably the newly captured second ringing signal being weighted particularly highly.

8. Method (2) according to any one of claims 1 to 7, **characterized in that** the at least one newly captured first ringing signal of the first ultrasonic transducer (3) and/or the at least one newly captured second ringing signal of the second ultrasonic transducer (4) is/are evaluated, in particular with regard to the state of the first ultrasonic transducer (3) or the second ultrasonic transducer (4).

9. Method (2) according to claim 8, **characterized in that** a frequency analysis of the at least one newly captured first ringing signal and/or of the at least one newly captured second ringing signal is carried out, and that a comparison parameter is derived from the frequency spectrum of the first ringing signal and/or from the frequency spectrum of the second ringing signal, and that the value of the comparison parameter is compared with values stored in the control and evaluation units (6) for the first ringing signal and/or for the second ringing signal.

10. Method (2) according to any one of claims 1 to 9, **characterized in that** the first correction signal (17) has a first interference signal and/or the second correction signal (17) has a second interference signal, that the first ultrasonic transducer (3) receives the measurement signal with a varying time offset ±T in the course of the measurement, so that the first interference signal overlays the first correction signal (17) both positively and negatively at the same points in the course of the measurement and/or that the second ultrasonic transducer (4) receives the measurement signal with a varying time offset ±T in the course of the measurement so that the second interference signal overlays the second correction signal (17) both positively and negatively at the same points in the course of the measurement.

11. Method (2) according to claim 10, **characterized in that** the first ultrasonic transducer (3) emits the first measurement signal with a varying time offset ±T with respect to the emission of the second measurement signal, so that the first measurement signal has a time offset ±T with respect to the second ringing measurement signal of the second ultrasonic transducer (4) and/or that the second ultrasonic transducer (4) emits the second measurement signal with a varying time offset ±T with respect to the emission of the first measurement signal, so that the second measurement signal has a time offset ±T with respect to the first ringing measurement signal of the first ultrasonic transducer (3).

12. Method (2) according to claim 10 or 11, **characterized in that** the time offset T between the emission of the first and the second measurement signal corresponds to a half period of the first or the second measurement signal, respectively.

13. Method (2) according to claim 11 or 12, **characterized in that** the first ultrasonic transducer emits the first measurement signal alternately delayed, i.e. with positive time offset +T, and temporally before the emission of the second measurement signal, i.e. with negative time offset -T or that the second ultrasonic transducer emits the second measuring signal alternately delayed, i.e. with positive time offset +T, and temporally before the emission of the first measuring signal, i.e. with negative time offset -T.

14. Ultrasonic flowmeter (1) with at least one first ultrasonic transducer (3), wherein the first ultrasonic transducer (3) is designed as a transmitting unit and as a receiving unit, and
with a measuring tube (5), wherein a medium flows through the measuring tube (5) during operation, and
with a control and evaluation unit (6) for controlling at least the first ultrasonic transducer (3) and for determining the flow velocity or the flow rate of the medium,
wherein the ultrasonic flowmeter (1) is designed to carry out a method according to any one of claims 1 to 13 during operation.

## Revendications

1. Procédé (2) pour faire fonctionner un débitmètre à ultrasons (1),
le débitmètre à ultrasons (1) possédant au moins un premier transducteur d'ultrasons (3), le premier transducteur d'ultrasons (3) étant réalisé sous la forme d'une unité d'émission et d'une unité de réception, et un tube de mesure (5), le tube de mesure (5) étant, en fonctionnement, traversé par un flux d'un fluide, et
une unité de commande et d'interprétation (6) destinée à commander au moins le premier transducteur d'ultrasons (3) et à déterminer la vitesse d'écoulement ou le débit du fluide,
le procédé (2) comprenant les étapes suivantes :
- acquisition (7) d'au moins un premier signal de sonnerie du premier transducteur d'ultrasons et détermination (8) d'un premier signal d'antiparasitage de sonnerie (16) en se basant sur l'au moins un premier signal de sonnerie acquis,
- émission (9) d'un premier signal de mesure dans le fluide par le premier transducteur d'ultrasons (3), un premier signal de mesure de sonnerie se produisant dans le premier transducteur d'ultrasons (3),
- réception (10) d'un signal de mesure en tant que premier signal reçu par le premier transducteur d'ultrasons (3), le premier signal reçu et le premier signal de mesure de sonnerie se superposant (11) pour former un premier signal de superposition (15),
- détermination (12) d'un premier signal de correction (17) par soustraction du premier signal d'antiparasitage de sonnerie (16) du premier signal de superposition (15) et
- détermination (13) de la vitesse d'écoulement ou du débit en se basant sur le premier signal de correction (17) .

2. Procédé (2) selon la revendication 1, le débitmètre à ultrasons (1) possédant au moins un premier transducteur d'ultrasons (3) et un deuxième transducteur d'ultrasons (4), le premier transducteur d'ultrasons (3) et le deuxième transducteur d'ultrasons (4) étant respectivement réalisés sous la forme d'une unité d'émission et d'une unité de réception, et le premier transducteur d'ultrasons (3) et le deuxième transducteur d'ultrasons (4) étant disposés au niveau du tube de mesure (5) décalés l'un par rapport à l'autre dans le sens de l'écoulement, **caractérisé en ce que**
le procédé (2) comprend les étapes suivantes :
- acquisition (7) d'au moins un premier signal de sonnerie du premier transducteur d'ultrasons (3) et détermination (8) d'un premier signal d'antiparasitage de sonnerie (16) en se basant sur l'au moins un premier signal de sonnerie acquis, et/ou
- acquisition (7) d'au moins un deuxième signal de sonnerie du deuxième transducteur d'ultrasons (4) et détermination (8) d'un deuxième signal d'antiparasitage de sonnerie (16) en se basant sur l'au moins un deuxième signal de sonnerie acquis,
- émission (9) d'un premier signal de mesure dans le fluide par le premier transducteur d'ultrasons (3), un premier signal de mesure de sonnerie se produisant dans le premier transducteur d'ultrasons (3),
- émission (9) d'un deuxième signal de mesure dans le fluide par le deuxième transducteur d'ultrasons (4), un deuxième signal de mesure de sonnerie se produisant dans le deuxième transducteur d'ultrasons (4),
- réception (10) du deuxième signal de mesure en tant que premier signal reçu par le premier transducteur d'ultrasons (3), le premier signal reçu et le premier signal de mesure de sonnerie se superposant (11) pour former un premier signal de superposition (15),
- réception (10) du premier signal de mesure en tant que deuxième signal reçu par le deuxième transducteur d'ultrasons (4), le deuxième signal reçu et le deuxième signal de mesure de sonnerie se superposant (11) pour former un deuxième signal de superposition (15),
- détermination (12) d'un premier signal de correction (17) par soustraction du premier signal d'antiparasitage de sonnerie (16) du premier signal de superposition (15) et/ou
- détermination (12) d'un deuxième signal de correction (17) par soustraction du deuxième signal d'antiparasitage de sonnerie (16) du deuxième signal de superposition (15) et
- détermination (13) de la vitesse d'écoulement ou du débit en se basant sur le premier et/ou le deuxième signal de correction (17).

3. Procédé (2) selon la revendication 2, **caractérisé en ce que** le premier transducteur d'ultrasons (3) et le deuxième transducteur d'ultrasons (4) émettent le premier signal de mesure et le deuxième signal de mesure sensiblement simultanément.

4. Procédé (2) selon l'une des revendications 1 à 3, **caractérisé en ce que** pendant une mesure, le premier signal d'antiparasitage de sonnerie (16) du premier transducteur d'ultrasons (3) et/ou le deuxième signal d'antiparasitage de sonnerie (16) du deuxième transducteur d'ultrasons (4) sont actualisés à des intervalles réguliers ou irréguliers.

5. Procédé (2) selon l'une des revendications 1 à 4, **caractérisé en ce que** le premier signal d'antiparasitage de sonnerie (16) correspond à une moyenne calculée sur une pluralité de mesures individuelles de premiers signaux de sonnerie du premier transducteur d'ultrasons (3) et/ou ne ce que le deuxième signal d'antiparasitage de sonnerie (16) correspond à une moyenne calculée sur une pluralité de mesures individuelles de deuxièmes signaux de sonnerie du deuxième transducteur d'ultrasons (4) .

6. Procédé (2) selon la revendication 5, **caractérisé en ce que** pour l'actualisation du premier signal d'antiparasitage de sonnerie (16) du premier transducteur d'ultrasons (3), le premier signal de sonnerie est nouvellement acquis pendant une mesure, un instant étant de préférence utilisé, auquel le deuxième transducteur d'ultrasons ne génère pas de signaux de mesure, et **en ce que** le premier signal d'antiparasitage de sonnerie (16) est actualisé en tenant compte du premier signal de sonnerie est nouvellement acquis et/ou pour l'actualisation du deuxième signal d'antiparasitage de sonnerie (16) du deuxième transducteur d'ultrasons (14), le deuxième signal de sonnerie est nouvellement acquis pendant une mesure, un instant étant de préférence utilisé, auquel le premier transducteur d'ultrasons ne génère pas de signaux de mesure, et **en ce que** le deuxième signal d'antiparasitage de sonnerie (16) est actualisé en tenant compte du deuxième signal de sonnerie est nouvellement acquis.

7. Procédé (2) selon la revendication 5 ou 6, **caractérisé en ce que** pour l'actualisation du premier signal d'antiparasitage de sonnerie (16), la moyenne calculée de plusieurs mesures individuelles est nouvellement déterminée en tenant compte du premier signal de sonnerie nouvellement acquis, le premier signal de sonnerie nouvellement acquis étant de préférence pondéré particulièrement haut et/ou **en ce que** pour l'actualisation du deuxième signal d'antiparasitage de sonnerie (16), la moyenne calculée de plusieurs mesures individuelles est nouvellement déterminée en tenant compte du deuxième signal de sonnerie nouvellement acquis, le deuxième signal de sonnerie nouvellement acquis étant de préférence pondéré particulièrement haut.

8. Procédé (2) selon l'une des revendications 1 à 7, **caractérisé en ce que** l'au moins un premier signal de sonnerie nouvellement acquis du premier transducteur d'ultrasons (3) et/ou l'au moins un deuxième signal de sonnerie nouvellement acquis du deuxième transducteur d'ultrasons (4), est ou sont interprétés notamment en ce qui concerne l'état du premier transducteur d'ultrasons (3) ou du deuxième transducteur d'ultrasons (4).

9. Procédé (2) selon la revendication 8, **caractérisé en ce qu'**une analyse de fréquence de l'au moins un premier signal de sonnerie nouvellement acquis et/ou de l'au moins un deuxième signal de sonnerie nouvellement acquis est effectuée et **en ce qu'**un paramètre de comparaison est dérivé du spectre de fréquences du premier signal de sonnerie et/ou du spectre de fréquences du deuxième signal de sonnerie, et **en ce que** la valeur du paramètre de comparaison est comparée avec des valeurs déposées dans les unités de commande et d'interprétation (6) pour le premier signal de sonnerie ou pour le deuxième signal de sonnerie.

10. Procédé (2) selon l'une des revendications 1 à 9, **caractérisé en ce que** le premier signal de correction (17) présente un premier signal parasite et/ou le deuxième signal de correction (17) présente un deuxième signal parasite, **en ce que** le premier transducteur d'ultrasons (3), au cours de la mesure, reçoit le signal de mesure avec un décalage temporel ±T variable, de sorte que le premier signal parasite se superpose à la fois positivement et négativement au premier signal de correction (17) aux mêmes endroits au cours de la mesure et/ou **en ce que** le deuxième transducteur d'ultrasons (4), au cours de la mesure, reçoit le signal de mesure avec un décalage temporel ±T variable, de sorte que le deuxième signal parasite se superpose à la fois positivement et négativement au deuxième signal de correction (17) aux mêmes endroits au cours de la mesure.

11. Procédé (2) selon la revendication 10, **caractérisé en ce que** le premier transducteur d'ultrasons (3) émet le premier signal de mesure avec un décalage temporel ±T variable en référence à l'émission du deuxième signal de mesure, de sorte que le premier signal de mesure présente un décalage temporel ±T par rapport au deuxième signal de mesure de sonnerie du deuxième transducteur d'ultrasons (4) et/ou **en ce que** le deuxième transducteur d'ultrasons (4) émet le deuxième signal de mesure avec un décalage temporel ±T variable en référence à l'émission du premier signal de mesure, de sorte que le deuxième signal de mesure présente un décalage temporel ±T par rapport au premier signal de mesure de sonnerie du premier transducteur d'ultrasons (3).

12. Procédé (2) selon la revendication 10 ou 11, **caractérisé en ce que** le décalage temporel T entre l'émission du premier et du deuxième signal de mesure correspond à une demi-période du premier ou du deuxième signal de mesure.

13. Procédé (2) selon la revendication 11 ou 12, **caractérisé en ce que** le premier transducteur d'ultrasons émet le premier signal de mesure retardé en alternance, c'est-à-dire avec un décalage temporel positif +T, et chronologiquement avant l'émission du deuxième signal de mesure, c'est-à-dire avec un décalage temporel négatif - T, ou **en ce que** le deuxième transducteur d'ultrasons émet le deuxième signal de mesure retardé en alternance, c'est-à-dire avec un décalage temporel positif +T, et chronologiquement avant l'émission du deuxième signal de mesure, c'est-à-dire avec un décalage temporel négatif - T.

14. Débitmètre à ultrasons (1) comprenant au moins un premier transducteur d'ultrasons (3), le premier transducteur d'ultrasons (3) étant réalisé sous la forme d'une unité d'émission et d'une unité de réception, et comprenant un tube de mesure (5), le tube de mesure (5) étant, en fonctionnement, traversé par un flux d'un fluide, et
comprenant une unité de commande et d'interprétation (6) destinée à commander au moins le premier transducteur d'ultrasons (3) et à déterminer la vitesse d'écoulement ou le débit du fluide,
le débitmètre à ultrasons (1) étant configuré pour mettre en œuvre un procédé selon l'une des revendications 1 à 13.
